(19) Europäisches Patentamt
European Patent Office
Office européen des brevets

(11) **EP 4 199 139 A1**

(12) **EUROPEAN PATENT APPLICATION**
published in accordance with Art. 153(4) EPC

(43) Date of publication:
**21.06.2023 Bulletin 2023/25**

(21) Application number: **22861706.4**

(22) Date of filing: **24.08.2022**

(51) International Patent Classification (IPC):
*H01M 4/13* (2010.01)       *H01M 4/139* (2010.01)
*H01M 4/04* (2006.01)       *H01M 4/62* (2006.01)
*H01M 4/133* (2010.01)       *H01M 4/02* (2006.01)

(52) Cooperative Patent Classification (CPC):
**H01M 4/02; H01M 4/04; H01M 4/13; H01M 4/133;
H01M 4/139; H01M 4/62;** Y02E 60/10; Y02P 70/50

(86) International application number:
**PCT/KR2022/012632**

(87) International publication number:
**WO 2023/027497 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.08.2021 KR 20210112407**

(71) Applicant: **LG Energy Solution, Ltd.**
**Seoul 07335 (KR)**

(72) Inventors:
• YU, Daeeun
 Daejeon 34122 (KR)
• LEE, Seok Kyeong
 Daejeon 34122 (KR)
• HWANG, Yongseon
 Daejeon 34122 (KR)
• CHOI, Hyungsung
 Daejeon 34122 (KR)
• PARK, Sungbin
 Daejeon 34122 (KR)

(74) Representative: **Plasseraud IP**
 **66, rue de la Chaussée d'Antin**
 **75440 Paris Cedex 09 (FR)**

(54) **NEGATIVE ELECTRODE FOR SECONDARY BATTERY, METHOD FOR MANUFACTURING SAME, AND SECONDARY BATTERY COMPRISING SAME**

(57)    The present disclosure relates to a negative electrode for a secondary battery in which a negative electrode active material layer is formed on at least one surface of a current collector,
wherein the negative electrode satisfies at least one of the following Conditions 1 and Condition 2,
[Condition 1]
the continuous adhesive force in the thickness direction of the negative electrode for secondary battery is 30 gf/20 mm or more,
[Condition 2]
the breaking stress of 3.6N or more,
wherein the breaking stress is a value measured by pressing the negative electrode active material layer with a linear tip having a width of 2.5 mm and a sharp end at a speed of 10 μm/s.

[FIG. 2]

EP 4 199 139 A1

**Description**

**[TECHNICAL FIELD]**

Cross Citation with Related Application(s)

This application claims the benefit of Korean Patent Application No. 10-2021-0112407 filed on August 25, 2021 with the Korean Intellectual Property Office, the entire contents of which are incorporated herein by reference.

The present disclosure relates to a negative electrode for a secondary battery, a manufacturing method thereof, and a secondary battery comprising the same.

**[BACKGROUND]**

Along with the technology development and increased demand for mobile devices, the demand for secondary batteries as energy sources is increasing rapidly. Among these secondary batteries, a lithium secondary battery having high energy density and a high operating voltage, a long cycle lifespan, and a low self-discharge rate is commercially available and widely used.

In recent years, as interest in environmental issues has increased, a considerable number of studies have been conducted on an electric vehicle (EV), a hybrid electric vehicle (HEV), and the like which can replace a vehicle using fossil fuels such as a gasoline vehicle and a diesel vehicle, which are one of the main causes of air pollution. As power sources for such electric vehicles (EV) and hybrid electric vehicles (HEV), lithium secondary batteries having high energy density, high discharge voltage, and output stability are mainly studied and used.

Generally, such a lithium secondary battery is manufactured by stacking or winding an electrode of a positive electrode and a negative electrode with a separator being interposed therebetween, and incorporating it into a secondary battery case together with an electrolyte.

At this time, the negative electrode is manufactured by applying an active material slurry containing a negative electrode active material onto a metal current collector, followed by drying, rolling, cutting with a unit electrode, and the like, but depending on the physical properties of the negative electrode, there is a problem that cracks and/or peeling off of the negative electrode active material layer occurs during the cutting.

However, such defects in the negative electrode may rapidly deteriorate the battery performance during subsequent manufacture of the secondary battery, and may also pose a problem in safety.

Therefore, there is a need to develop a technology that can solve these problems.

**[DETAILED DESCRIPTION OF THE INVENTION]**

**[Technical Problem]**

It is an object of the present disclosure to provide a negative electrode for a secondary battery that can prevent cracks and peeling off of a negative electrode active material layer when a negative electrode is cut during the manufacture of the negative electrode, a manufacturing method thereof, and a secondary battery comprising the same.

**[Technical Solution]**

According to one embodiment of the present disclosure, there is provided a negative electrode for a secondary battery in which a negative electrode active material layer is formed on at least one surface of a current collector,

wherein the negative electrode satisfies at least one of the following Conditions 1 and Condition 2,
[Condition 1]
the continuous adhesive force in the thickness direction of the negative electrode for secondary battery is 30 gf/20 mm or more,
[Condition 2]

the breaking stress of 3.6N or more,
wherein the breaking stress is a value measured by pressing the negative electrode active material layer with a linear tip having a width of 2.5 mm and a sharp end at a speed of 10 $\mu$m/s.

At this time, the continuous adhesive force of the Condition 1 is an adhesive force between active material layers per 10 $\mu$m in the thickness direction of the negative electrode.

Also, the negative electrode active material layer comprises a negative electrode active material, a conductive material, and a binder, wherein in order to allow the continuous adhesive strength of the Condition 1 to satisfy 30 gf/20 mm or more, the content of the binder contained in each active material layer per 10 $\mu$m in the thickness direction of the negative electrode includes 2% by weight or more based on the total weight of each active material layer having a thickness of 10 $\mu$m.

Moreover, when the negative electrode satisfies the Condition 1, the negative electrode may have a porosity of 28% or less, specifically 5% to 28%.

Most specifically, the negative electrode may satisfy both the Condition 1 and the Condition 2.

Meanwhile, according to another embodiment of the present disclosure, there is provided a method for manufacturing the negative electrode for a secondary battery as mentioned above, the method comprising the steps of:

(a) applying a negative active material slurry onto at least one surface of the current collector;
(b) drying the negative electrode active material slurry to form a negative electrode active material layer; and
(c) rolling the negative electrode active material layer to manufacture a negative electrode for a secondary battery,

wherein at least one of the following Condition 1, Condition 3 and Condition 4 is satisfied, and a misfit strain of the Condition 3 or Condition 4 is represented by the following Equation 1:

[Condition 1]
the continuous adhesive force in the thickness direction of the negative electrode for a secondary battery is 30 gf/20 mm or more,
[Condition 3]
misfit strain occurring during drying in step (b) is 0.1% or less,
[Condition 4]
misfit strain occurring during rolling in step (c) is 0.1% or less,

[Equation 1]

$$\varepsilon_{mf} = \frac{\sigma(\text{drying and rolling stress, } MPa)}{E_e(\text{electrode elastic modulus, } GPa)} \times 100$$

wherein, the drying stress ($\sigma$) may be obtained according to the following Equation 2:

[Equation 2]

$$\sigma = \frac{DE_s t_s^3}{3 t_c L^2 (t_s + t_c)(1 - v_s)},$$

wherein,
$t_s$ is the thickness of the current collector, $t_c$ is the thickness of the dried negative electrode active material layer, $E_s$ is the elastic modulus of the current collector, L is the length of the current collector in a direction parallel to the protrusion direction of the tab, $v_s$ is the Poisson's ratio of the current collector, and D is the deflection of the current collector according to the drying.

The rolling stress $\sigma$ may be a rolling load acting per unit area.

The negative electrode elastic modulus ($E_e$) may be obtained according to the following Equation 3:

[Equation 3]

$$E_e = \frac{E_{tot}(T_f + T_e) - E_f T_f}{T_e},$$

wherein,
Etot is the total elastic modulus of the current collector and the negative active material layer after drying or the negative active material layer after rolling, Ef is the elastic modulus of the current collector, Tf is the thickness of the current collector, and Te is the thickness of the negative active material layer after drying or the negative active material layer after rolling.

According to yet another embodiment of the present disclosure, there is provided a secondary battery comprising the negative electrode for a secondary battery.

**[BRIEF DESCRIPTION OF THE DRAWINGS]**

Fig. 1 is a graph showing the continuous adhesive force of a negative electrode manufactured according to Comparative Example 1;
Fig. 2 is a graph showing the continuous adhesion force of the negative electrode manufactured according to Example 1;
Fig. 3 is a graph showing the continuous adhesive force of the negative electrode manufactured according to Example 2;
Fig. 4 is a graph showing the continuous adhesive force of the negative electrode manufactured according to Example 3;
Fig. 5 is a photomicrograph of the negative electrode of Comparative Example 1 according to Experimental Example 5;
Fig. 6 is a photomicrograph of the negative electrode of Example 1 according to Experimental Example 5;
Fig. 7 is a photomicrograph of the negative electrode of Example 2 according to Experimental

Example 5; and

Fig. 8 is a photomicrograph of the negative electrode of Example 3 according to Experimental Example 5.

**[DETAILED DESCRIPTION OF THE EMBODIMENTS]**

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the terms and words as terms for describing most appropriately the best method he or she knows for carrying out the invention. Accordingly, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed, and the scope of the present invention is not limited to the embodiments described below.

According to one embodiment of the present disclosure, there is provided a negative electrode for a secondary battery in which a negative electrode active material layer is formed on at least one surface of a current collector,

wherein the negative electrode satisfies at least one of the following Conditions 1 and Condition 2,
[Condition 1]
the continuous adhesive force in the thickness direction of the negative electrode for secondary battery is 30 gf/20 mm or more,
[Condition 2]

the breaking stress of 3.6N or more,
wherein the breaking stress is a value measured by pressing the negative electrode active material layer with a linear tip having a width of 2.5 mm and a sharp end at a speed of 10 $\mu$m/s.

Specifically, the continuous adhesive force of the Condition 1 means an adhesive force between active material layers per 10 $\mu$m in the thickness direction of the negative electrode. That is, when the adhesive force between the active material layers per 10 $\mu$m is measured, it is considered that the above Condition 1 is not satisfied if the adhesive force is less than 30 gf/20 mm in any section.

Such a continuous adhesive force is similar to the method of measuring the adhesive force of the manufactured negative electrode. Specifically, a double-sided tape is attached to a slide glass, a negative electrode punched to 30 mm $\times$ 125 mm is placed thereon, and then a 20 mm wide scotch magic tape is attached to the upper surface of the negative electrode. And, in order to uniformly attach the negative electrode and the slide glass, and the negative electrode and the Scotch Magic tape, it is passed through a laminator at room temperature, and then the scotch magic tape is pulled at 100 mm/min using a UTM (from TA Instruments) device to measure the peeling force from the negative electrode. At this time, the measurement angle of the slide glass and the negative electrode is 90°. After that, the scotch magic tape is attached in a state in which the peeled upper active material layer was eliminated, and then pulled at 100 mm/min using a UTM (from TA Instruments) device to measure the peeling force from the negative electrode. The continuous adhesive force means a value measured by conducting an adhesion force test while continuously removing the peeled active material layer in this way.

If the adhesive force is less than 30gf/20mm even in any section of the values measured in this way, it is determined that the above Condition 1 is not satisfied.

That is, the present inventors confirmed that when the above Condition 1 is satisfied, cracks or peeling off of the negative electrode active material layer do not occur when cutting the negative electrode.

The methods for satisfying such Condition 1 may be diverse, and if the above Condition 1 is satisfied regardless of the method, cracks or peeling off of the negative electrode active material layer do not occur. However, as an example, in order to satisfy the above Condition 1, the negative electrode active material layer includes a negative electrode active material, a conductive material, and a binder, wherein the content of the binder contained in each active material layer per 10 $\mu$m in the thickness direction of the negative electrode may include 2% by weight or more based on the total weight of each active material layer having a thickness of 10 $\mu$m.

That is, the binder should be contained in an amount of 2% by weight or more in every 10 each active material layer having a thickness of 10 $\mu$m, which has a similar meaning that the binder should be uniformly distributed at 2% by weight or more anywhere. When the binder is contained in an amount of 2% by weight or more in any section in this way, the continuous adhesive force may satisfy the Condition 1.

Further, when the negative electrode satisfies the Condition 1, the porosity of the negative electrode may be 28% or less, specifically 5% to 28% or less, more specifically 10% to 25%.

The porosity may be determined by a process in which the surface of the negative electrode is magnified 2,500 times and measured using a scanning electron microscope (FE-SEM) (Hitachi S-4800 Scanning Electron Microscope), and then the area ratio of surface voids found in the randomly sampled range (10um or more in width and 15um or more in length) in the measured photograph is calculated relative to the total area and converted into a volume.

If the porosity is too large outside the above range, the adhesive force of the negative electrode may be lowered, which is not preferable.

Meanwhile, even if the Condition 1 is not satisfied, the present inventors confirmed that as described above, when the breaking stress is 3.6N or more, which is the Condition 2, cracks or peeling off of the negative electrode active material layer do not occur.

Specifically, the breaking stress may be 3.6N or more to 5N or less.

The breaking stress may be a value measured by pressing the negative electrode active material layer with a linear tip having a width of 2.5 mm and a sharp end at a speed of 10 $\mu$m/s as described above, and more specifically, it is a value measured by vertically pressing the negative electrode in the 90 degree direction using DHR (from TA Instruments).

When the breaking stress satisfies the condition according to the present disclosure, cracks or peeling off of the negative electrode active material layer do not occur.

If the breaking stress is too small outside the scope of the present disclosure, cracks or peeling off of the negative electrode active material layer may occur, and when the breaking stress is too large, the flexibility is too low, which is not preferable.

Adjusting the breaking stress can be obtained by adjusting misfit stain during drying and rolling in the manufacturing step of the negative electrode, as will be described below.

Therefore, most specifically, the negative electrode may satisfy both the Condition 1 and the Condition 2.

Meanwhile, according to another embodiment of the present disclosure, there is provided a method for manufacturing the negative electrode for secondary battery, the method comprising the steps of:

(a) applying a negative active material slurry onto at least one surface of the current collector;
(b) drying the negative electrode active material slurry to form a negative electrode active material layer; and
(c) rolling the negative electrode active material layer to manufacture a negative electrode for a secondary battery,

wherein at least one of the following Condition 1, Condition 3 and Condition 4 is satisfied, and a misfit strain of the Condition 3 or Condition 4 is represented by the following Equation 1:

[Condition 1]
the continuous adhesive force in the thickness direction of the negative electrode for a secondary battery is 30 gf/20 mm or more,

[Condition 3]
misfit strain occurring during drying in step (b) is 0.1% or less,
[Condition 4]
misfit strain occurring during rolling in step (c) is 0.1% or less,

[Equation 1]

$$\varepsilon_{mf} = \frac{\sigma(\text{drying and rolling stress, } MPa)}{E_e(\text{electrode elastic modulus, } GPa)} \times 100$$

After repeated in-depth research by the present inventors, it has been found that as described above, in order for the breaking stress of the negative electrode for a secondary battery to have the above value, the misfit strain occurring during the manufacturing process satisfies at least one of the Conditions 3 and 4 above.

Therefore, when the negative electrode is manufactured so as to satisfy the above Conditions 3 and 4, the effect of the present disclosure can be achieved.

When the above Conditions are satisfied, cracks or peeling off of the negative electrode do not occur as an effect intended by the present disclosure.

Condition 1 is the same as described above.

The misfit strain of Conditions 3 and 4 is obtained as in Equation 1 above, wherein the drying or rolling stress and the method of obtaining the elastic modulus of the negative electrode are the same as described below.

Specifically, the drying stress ($\sigma$) can be a value obtained according to the following Equation 2:

[Equation 2]

$$\sigma = \frac{DE_s t_s^3}{3t_c L^2(t_s + t_c)(1 - v_s)},$$

wherein,

$t_s$ is the thickness of the current collector, $t_c$ is the thickness of the dried negative electrode active material layer, $E_s$ is the elastic modulus of the current collector, L is the length of the current collector in a direction parallel to the protrusion direction of the tab, $v_s$ is the Poisson's ratio of the current collector, and D is the deflection of the current collector according to the drying.

Here, the thickness of the current collector and the negative electrode active material layer and the length of the current collector can be determined with the naked eye, and the elastic modulus and the Poisson's ratio of the current collector mean a value of the metal forming the current collector, which is a fixed value. For example, the elastic modulus of Al is $7.19 \times 10^2$, the Poisson's ratio may be 0.34, the elastic modulus of Cu is $1.25 \times 10^3$, and the Poisson's ratio may be 0.34. Further, the deflection of the current collector may measure the degree of bending of the negative electrode using a laser and a position sensor. The degree of bending is the value measured at the Z-axis height, in which the dried negative electrode is interposed in a flat holder and the negative electrode is bent downward or upward when viewed from the side.

Further, the rolling stress ($\sigma$) means a rolling load acting per unit area, unlike the drying stress.

The rolling load may be selected by the operator as the rolling applied to the negative electrode during rolling.

Further, the negative electrode elastic modulus (Ee) may be a value obtained according to the following Equation 3.

[Equation 3]

$$E_e = \frac{E_{tot}(T_f + T_e) - E_f T_f}{T_e},$$

wherein,

Etot is the total elastic modulus of the current collector and the negative active material layer after drying or the negative active material layer after rolling, Ef is the elastic modulus of the current collector, Tf is the thickness of the current collector, and Te is the thickness of the negative active material layer after drying or the negative active material layer after rolling.

The current collector elastic modulus of the Ef, the thickness of the current collector, and the thickness of the negative active material layer are the same as described above, and the total elastic modulus of the Etot is a value measured using a DMA instrument (viscoelasticity measuring device).

When the drying or rolling stress and the negative electrode elastic modulus obtained in this way substitutes into Equation 1 above and any one of the misfit strains satisfies the condition of 0.1% or less, the breaking stress of the negative electrode becomes 3.6N or more, and the effects intended by the present disclosure can be exhibited.

Therefore, it can be determined whether the conditions of the present invention are satisfied from the manufacturing stage, defects can be detected quickly, and cracks and/or peeling off of the negative electrode active material layer can be prevented, thereby preventing secondary battery performance deterioration and safety deterioration including the same.

Meanwhile, according to another embodiment of the present disclosure, there is provided a secondary battery including the negative electrode for a secondary battery.

Other manufacturing methods and components of the secondary battery are known in the art, and thus, a detailed description thereof is omitted here, which also falls under the scope of the present disclosure.

Hereinafter, preferred embodiments of the present disclosure will be mainly described with reference to Examples, Comparatives, and the accompanying drawings.

<Comparative Example 1> (when the continuous adhesive force of the negative electrode is 30 gf or less and drying/rolling misfit strain is 0.1% or more)

Artificial graphite as an active material, a binder (SBR and CMC were mixed in a weight ratio of 2:1), and carbon black as a conductive material was mixed in a weight ratio of 96:2.5:1.5. The mixture and the dispersion medium was mixed at a weight ratio of 1:2 using water as a dispersion medium to prepare a slurry for the active material layer.

Using a slot die, the slurry for the active material layer was coated onto one surface of a copper (Cu) thin film that is a negative electrode current collector having a thickness of 10 $\mu$m, and dried under vacuum at 130°C for 1 hour to form an active material layer. The active material layer thus formed was rolled by a roll pressing method to manufacture a negative electrode having an active material layer having a thickness of 80 $\mu$m.

The porosity of the manufactured negative electrode was 30%.

The porosity is the value determined by a process in which the surface of the negative electrode was magnified 2,500 times and measured using a scanning electron microscope (FE-SEM) (Hitachi S-4800 Scanning Electron Microscope), and then the area ratio of surface voids found in the randomly sampled range (10um or more in width and 15um or more in length) in the measured photograph was calculated relative to the total area and converted into a volume.

<Example 1> (when the continuous adhesive force of the negative electrode is 30 gf or mores and drying/rolling misfit strain is 0.1% or more)

A negative electrode was manufactured in the same manner as in Comparative Example 1, except that in Comparative Example 1, active material: binder: conductive material were mixed in a weight ratio of 96:2.8:1.2 and rolled so that the active material layer had a thickness of 75 $\mu$m during rolling. The porosity of the manufactured negative electrode was 25%.

<Example 2> (when the continuous adhesive force of the negative electrode is 30 gf or less, drying misfit strain is 0.1% or less and rolling misfit strain is 0.1% or more)

A negative electrode was manufactured in the same manner as in Comparative Example 1, except that in Comparative Example 1, the slurry for active material layer was dried under vacuum at 100°C for 30 minutes, then dried under vacuum at 110°C for 30 minutes, and again dried under vacuum at 130°C for 30 minutes to form an active material layer. The porosity of the manufactured negative electrode was 30%.

<Example 3> (when the continuous adhesive force of the negative electrode is 30 gf or less, drying misfit strain is 0.1% or more and rolling misfit strain is 0.1% or less)

A negative electrode was manufactured in the same manner as in Comparative Example 1, except that in Comparative Example 1, during rolling, the active material layer was primarily rolled to a thickness of 90 $\mu$m, and then secondarily rolled again to a thickness of 80 $\mu$m. The porosity of the manufactured negative electrode was 30%.

<Experimental Example 1>

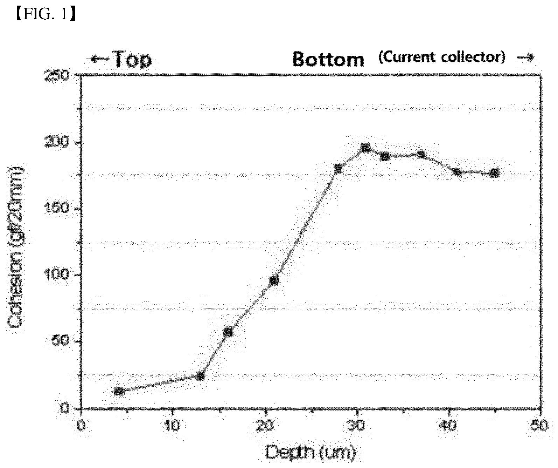

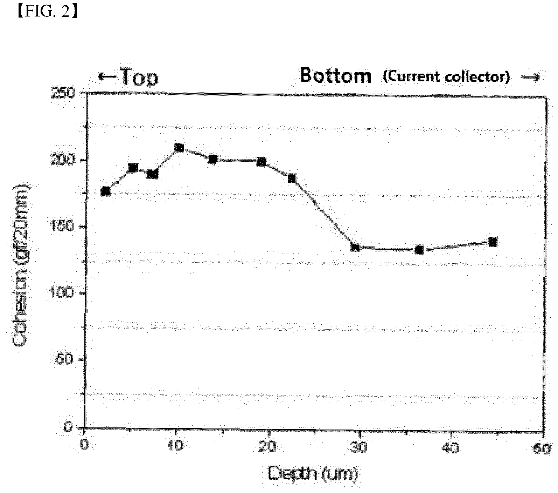

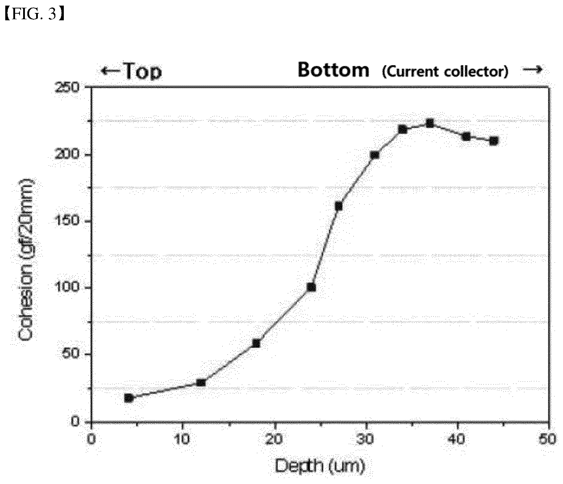

The continuous adhesive force of the negative electrodes manufactured in Comparative Example 1 and Examples 1 to 3 was measured, and shown in Figs. 1 to 4 below.

A double-sided tape was attached to a slide glass, a negative electrode punched to 30 mm × 125 mm was placed thereon, and then a 20 mm wide scotch magic tape was attached to the upper surface of the negative electrode. And, in order to uniformly attach the negative electrode and the slide glass, and the negative electrode and the Scotch Magic tape, it was passed through a laminator at room temperature, and then the scotch magic tape was pulled at 100 mm/min using a UTM (from TA Instruments) device to measure the peeling force from the negative electrode. At this time, the measurement angle of the slide glass and the negative electrode was 90°. After that, the scotch magic tape was attached in a state in which the peeled upper active material layer was eliminated, and then pulled at 100 mm/min using a UTM (from TA Instruments) device to measure the peeling force from the negative electrode. The continuous adhesive force of the negative electrode means a value measured by conducting an adhesion force test while continuously removing the peeled active material layer in this way.

Reviewing Figs. 1 to 4 below, it can be confirmed that the negative electrode continuous adhesive force of Comparative Examples 1, Example 2 and 3 is 30 gf/20 mm or less in some sections, while the continuous adhesive force of the negative electrode of Example 1 is 30 gf/20 mm or more in the entire section.

<Experimental Example 2>

Misfit strains in the drying and rolling processes of the negative electrodes manufactured in Comparative Example 1 and Examples 1 to 3 were calculated, and shown in Table 1 below.

[Table 1]

|  |  | Drying process | Rolling process |
| --- | --- | --- | --- |
| Comparative Example 1 | Stress | 0.9 | 1.3 |
|  | Elastic modulus | 0.52 | 0.80 |
|  | Misfit strain(%) | 0.16 | 0.16 |
| Example 1 | Stress | 0.9 | 1.5 |
|  | Elastic modulus | 0.55 | 0.76 |
|  | Misfit strain(%) | 0.17 | 0.20 |
| Example 2 | Stress | 0.4 | 1.0 |
|  | Elastic modulus | 0.46 | 0.58 |
|  | Misfit strain(%) | 0.09 | 0.17 |
| Example 3 | Stress | 0.6 | 0.7 |
|  | Elastic modulus | 0.56 | 0.73 |
|  | Misfit strain(%) | 0.11 | 0.09 |

Referring to Table 1, it can be confirmed that in Comparative Example 1 and Example 1, both drying and rolling misfit strains are 0.1% or more, while in Examples 2 and 3, at least any one is 0.1% or less.
The stress and elastic modulus are obtained from Equation 2, the rolling load and Equation 3, and the misfit strain is obtained from Equation 1 based on the above values.

<Experimental Example 3>

The breaking stresses of the negative electrodes manufactured in Comparative Example 1 and Examples 1 to 3 were measured, and are shown in Table 2 below.
The breaking stress is a value measured by vertically pressing the negative electrode active material layer with a linear tip having a width of 2.5 mm and a sharp end at a speed of 10 $\mu$m/s in the 90 degree direction using DHR (from TA Instruments).

[Table 2]

|  | Breaking stress (N) |
| --- | --- |
| Comparative Example 1 | 2.5 |
| Example 1 | 2.8 |
| Example 2 | 3.8 |
| Example 3 | 3.7 |

Reviewing Table 2, it can be confirmed that when at least one of the misfit strains of the drying process or the rolling process is 0.1% or less in comparison with Experimental Example 2, the breaking stress is 3.6N or more.

<Experimental Example 4>

The negative electrodes manufactured in Comparative Example 1 and Examples 1 to 3 were notched in half to examine the presence or absence of cracks.

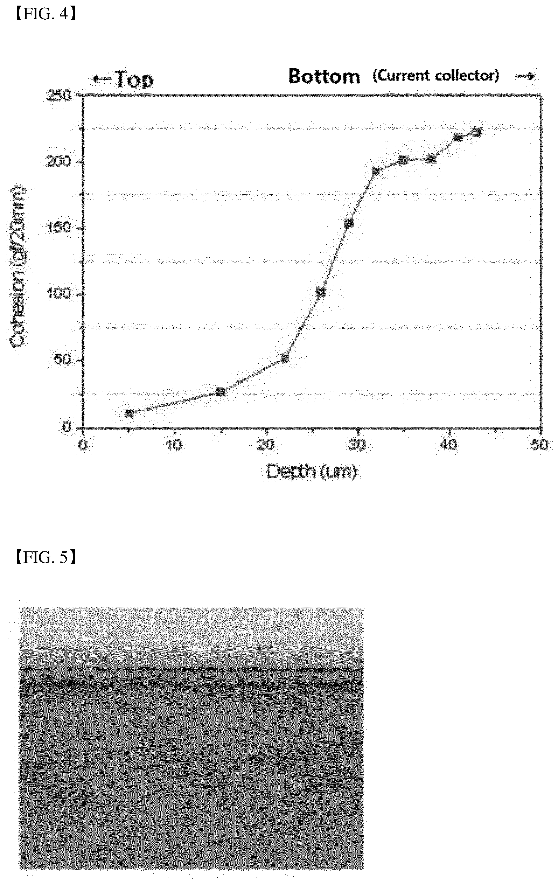

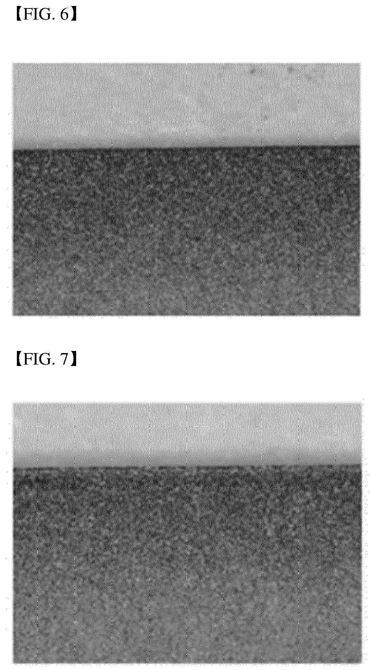

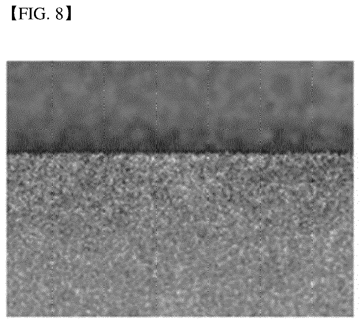

The presence or absence of cracks was confirmed with the naked eye by taking a photomicrograph of the upper part of the negative electrode in a vertical direction, and the results are shown in Figs. 5 to 8 below.

Reviewing Figs. 5 to 8, it can be confirmed that cracks occurred only in Comparative Example 1, which did not satisfy all of Condition 1 and Condition 2, or Condition 1, Condition 3 and Condition 4.

Therefore, it can be seen that when any one of the above Conditions 1 to 4 of the present disclosure is satisfied, the effects intended by the present disclosure can eb achieved.

A person having ordinary knowledge in the field to which the present disclosure belongs can make various applications and modifications departing the sprit and scope of the present disclosure based on the above contents.

[Industrial Applicability]

Since the negative electrode for a secondary battery according to the present disclosure satisfies a specific condition, no cracks or peeling off of the negative electrode active material layer occurs when the negative electrode is cut, whereby it is possible to solve the problem of performance deterioration or safety deterioration of the secondary battery including such a negative electrode.

**Claims**

1. A negative electrode for a secondary battery in which a negative electrode active material layer is formed on at least one surface of a current collector,

    wherein the negative electrode satisfies at least one of the following Conditions 1 and Condition 2,
    [Condition 1]
    the continuous adhesive force in the thickness direction of the negative electrode for a secondary battery is 30 gf/20 mm or more,
    [Condition 2]

    the breaking stress of 3.6N or more,
    wherein the breaking stress is a value measured by pressing the negative electrode active material layer with a linear tip having a width of 2.5 mm and a sharp end at a speed of 10 $\mu$m/s.

2. The negative electrode for a secondary battery according to claim 1 wherein:
    the continuous adhesive force of the Condition 1 is an adhesive force between active material layers per 10 $\mu$m in the thickness direction of the negative electrode.

3. The negative electrode for a secondary battery according to claim 1 wherein:

    the negative electrode active material layer comprises a negative electrode active material, a conductive material, and a binder, and

when the negative electrode satisfies the Condition 1, the content of the binder contained in each active material layer per 10 $\mu$m in the thickness direction of the negative electrode is 2% by weight or more based on the total weight of each active material layer having a thickness of 10 $\mu$m.

4. The negative electrode for a secondary battery according to claim 1 wherein:
when the negative electrode satisfies the Condition 1, the negative electrode has a porosity of 28% or less.

5. The negative electrode for a secondary battery according to claim 5 wherein:
when the negative electrode satisfies the Condition 1, the negative electrode has a porosity of 5% to 28%.

6. The negative electrode for a secondary battery according to claim 1 wherein:
the negative electrode satisfies both the Condition 1 and the Condition 2.

7. A method for manufacturing the negative electrode for a secondary battery according to claim 1, the method comprising the steps of:

(a) applying a negative active material slurry onto at least one surface of the current collector;
(b) drying the negative electrode active material slurry to form a negative electrode active material layer; and
(c) rolling the negative electrode active material layer to manufacture a negative electrode for a secondary battery,

wherein at least one of the following Condition 1, Condition 3 and Condition 4 is satisfied, and a misfit strain of the Condition 3 or Condition 4 is represented by the following Equation 1:

[Condition 1]
the continuous adhesive force in the thickness direction of the negative electrode for a secondary battery is 30 gf/20 mm or more,
[Condition 3]
misfit strain occurring during drying in step (b) is 0.1% or less,
[Condition 4]
misfit strain occurring during rolling in step (c) is 0.1% or less,

[Equation 1]

$$\varepsilon_{mf} = \frac{\sigma(\text{drying or rolling stress}, MPa)}{E_e(\text{Electrode elastic modulus}, GPa)} \times 100$$

8. The method for manufacturing the negative electrode for a secondary battery according to claim 7 wherein:

the drying stress ($\sigma$) is obtained according to the following Equation 2:

[Equation 2]

$$\sigma = \frac{DE_s t_s^3}{3t_c L^2 (t_s + t_c)(1 - v_s)},$$

wherein,
$t_s$ is the thickness of the current collector, $t_c$ is the thickness of the dried negative electrode active material layer, $E_s$ is the elastic modulus of the current collector, L is the length of the current collector in a direction parallel to the protrusion direction of the tab, $v_s$ is the Poisson's ratio of the current collector, and D is the deflection of the current collector according to the drying.

9. The method for manufacturing the negative electrode for a secondary battery according to claim 7 wherein:
the rolling stress $\sigma$ is a rolling load acting per unit area.

10. The method for manufacturing the negative electrode for a secondary battery according to claim 7 wherein:

the negative electrode elastic modulus (Ee) is obtained according to the following Equation 3:

[Equation 3]

$$E_e = \frac{E_{tot}(T_f + T_e) - E_f T_f}{T_e},$$

wherein,

Etot is the total elastic modulus of the current collector and the negative active material layer after drying or the negative active material layer after rolling, Ef is the elastic modulus of the current collector, Tf is the thickness of the current collector, and Te is the thickness of the negative active material layer after drying or the negative active material layer after rolling.

11. A secondary battery comprising the negative electrode for a secondary battery according to claim 1.

【FIG. 1】

【FIG. 2】

【FIG. 3】

【FIG. 4】

【FIG. 5】

【FIG. 6】

【FIG. 7】

【FIG. 8】

## INTERNATIONAL SEARCH REPORT

International application No.

**PCT/KR2022/012632**

### A. CLASSIFICATION OF SUBJECT MATTER

**H01M 4/13**(2010.01)i; **H01M 4/139**(2010.01)i; **H01M 4/04**(2006.01)i; **H01M 4/62**(2006.01)i; **H01M 4/133**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/13(2010.01); B26D 1/24(2006.01); H01M 10/0525(2010.01); H01M 4/02(2006.01); H01M 4/04(2006.01); H01M 4/134(2010.01); H01M 4/1395(2010.01); H01M 4/62(2006.01); H01M 4/70(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 이차전지(secondary battery), 파단응력(rupture stress), 접착력 (adhesive strength)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0057966 A (LG CHEM, LTD.) 29 May 2019 (2019-05-29)<br>See claims 1 and 10; paragraphs [0054], [0057], [0062], [0064] and [0107]-[0108]; and table 1. | 1-5,11 |
| Y | | 7 |
| A | | 6,8-10 |
| Y | JP 5879673 B2 (SONY CORP.) 08 March 2016 (2016-03-08)<br>See claim 7. | 7 |
| A | JP 2005-317496 A (DAINIPPON PRINTING CO., LTD.) 10 November 2005 (2005-11-10)<br>See entire document. | 1-11 |
| A | JP 2002-216746 A (SANYO ELECTRIC CO., LTD.) 02 August 2002 (2002-08-02)<br>See entire document. | 1-11 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 November 2022** | **28 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/012632** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2021-0060241 A (LG ENERGY SOLUTION, LTD.) 26 May 2021 (2021-05-26)<br>See entire document. | 1-11 |

**INTERNATIONAL SEARCH REPORT**
**Information on patent family members**

International application No.

**PCT/KR2022/012632**

| Patent document cited in search report | | | Publication date (day/month/year) | Patent family member(s) | | | Publication date (day/month/year) |
|---|---|---|---|---|---|---|---|
| KR | 10-2019-0057966 | A | 29 May 2019 | CN | 111095616 | A | 01 May 2020 |
| | | | | EP | 3660958 | A1 | 03 June 2020 |
| | | | | EP | 3660958 | A4 | 02 December 2020 |
| | | | | KR | 10-2358448 | B1 | 04 February 2022 |
| | | | | US | 2020-0403230 | A1 | 24 December 2020 |
| | | | | WO | 2019-103465 | A1 | 31 May 2019 |
| JP | 5879673 | B2 | 08 March 2016 | CN | 102013473 | A | 13 April 2011 |
| | | | | CN | 102013473 | B | 06 November 2013 |
| | | | | JP | 2011-054462 | A | 17 March 2011 |
| | | | | US | 2011-0052984 | A1 | 03 March 2011 |
| | | | | US | 9350023 | B2 | 24 May 2016 |
| JP | 2005-317496 | A | 10 November 2005 | JP | 4712338 | B2 | 29 June 2011 |
| | | | | KR | 10-2005-0031998 | A | 06 April 2005 |
| | | | | US | 2005-0130039 | A1 | 16 June 2005 |
| JP | 2002-216746 | A | 02 August 2002 | JP | 3895932 | B2 | 22 March 2007 |
| | | | | US | 2002-0160265 | A1 | 31 October 2002 |
| | | | | US | 6808846 | B2 | 26 October 2004 |
| KR | 10-2021-0060241 | A | 26 May 2021 | CN | 114586193 | A | 03 June 2022 |
| | | | | EP | 4040534 | A1 | 10 August 2022 |
| | | | | WO | 2021-101219 | A1 | 27 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210112407